# EUROPÄISCHE PATENTSCHRIFT

(11) **EP 0 713 794 B1**
(45) Veröffentlichungstag und Bekanntmachung des Hinweises auf die Patenterteilung: **19.08.1998**
(21) Anmeldenummer: 95114926.9
(22) Anmeldetag: 22.09.1995
(51) Int. Cl.: B60J 7/12

(54) **Faltverdeck für Fahrzeuge, insbesondere Personenkraftwagen**
Folding top for vehicle, particularly for passenger motorvehicle
Capote pliante pour véhicule, en particulier pour voiture automobile

(30) Priorität: 23.11.1994 DE 4441671
(43) Veröffentlichungstag der Anmeldung: 29.05.1996
(73) Patentinhaber: Dr.Ing.h.c. F. Porsche Aktiengesellschaft, 70435 Stuttgart (DE)
(72) Erfinder: Aydt, Matthias, D-71735 Eberdingen (DE); Pfertner, Kurt, D-71299 Wimsheim (DE); Zeissner, Alexander, D-75428 Illingen (DE); Thomas, Peter, D-75233 Tiefenbronn (DE); Blech, Christof, D-71272 Renningen (DE)

(56) Entgegenhaltungen:
- DE-A- 4 234 811
- FR-A- 1 000 773
- US-A- 2 524 171

## Beschreibung

Die Erfindung bezieht sich auf ein Faltverdeck für Fahrzeuge, insbesondere Personenkraftwagen gemäß dem Oberbegriff des Patentanspruchs 1.

Aus der EP 0 509 326 A1 ist einFaltverdeck für Fahrzeuge bekannt, das sich aus einem Verdeckgestell und einem Verdeckbezug zusammensetzt.

Der Verdeckbezug ist um seitlich außenliegende, längsgerichtete Rahmenteile des Verdeckgestells herumgeführt, wobei Randkanten des Verdeckbezugs mit Formleisten verbunden und an der Unterseite der Rahmenteile befestigt sind. Gleichzeitig ist in diesem Bereich eine Halteschiene angeschraubt, die eine Dichtleiste aufnimmt.

Im Verbindungsbereich zwischen dem Verdeckbezug und den Formleisten sind ein Einfaßband bzw. ein Kederband zur Ausbildung einer Regenrinne angeordnet.

Dieser Anordnung haftet der Nachteil an, daß das Wechseln des Verdeckbezuges relativ zeit- und montageaufwendig ist, da sowohl die Dichtleisten als auch die angeschraubten Halteschienen vom Rahmenteil entfernt und nachfolgend wieder montiert werden müssen. Zudem bewirken die seitlich abstehenden Regenrinnen im Fahrbetrieb relativ hohe Umströmgeräusche.

Aufgabe der Erfindung ist es, an einem Faltverdeck solche Vorkehrungen zu treffen, daß einerseits der Montageaufwand zum Wechseln des Verdeckbezugs reduziert wird und daß andererseits die Umströmgeräusche im Fahrbetrieb minimiert werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die räumliche Trennung der Befestigungen für den Verdeckbezug und die Dichtleisten das Auswechseln eines beschädigten Verdeckbezugs wesentlich erleichtert wird, da lediglich die Dichtleisten aus den Halteschienen entfernt werden müssen. Die Halteschienen können hingegen an den seitlichen Rahmenteilen montiert bleiben.

Die Befestigungsschrauben für den Verdeckbezug sind durch Aussparungen der Halteschiene von unten her zugänglich.

Der zwischen den beiden Befestigungen ausgebildete, zur Fahrzeugaußenseite hin vorstehende, die Karosserieaußenhaut bildende Wandabschnitt der seitlichen Rahmenteile stellt ein besonderes Stylingmerkmal bzw. eine Stylingkante dar und gewährleistet darüber hinaus einen definierten Übergang zwischen dem Verdeckbezug und den seitlichen Ramenteilen.

Die nasenförmigen Teilbereiche der vorstehenden Wandabschnitte bilden zusammen mit dem Verdeckbezug eine Regenrinne. Da diese Regenrinne in das seitliche Rahmenteil integriert ist und sich nicht wie bisher üblich vom Rahmenteil weg nach außen hin aufbaut, werden die Umströmungsgeräusche im Fahrbetrieb deutlich reduziert, weil sich der seitliche Abstand zwischen der Regenrinne und der angrenzenden Sichtscheibe deutlich verringert.

Die Dichtleisten sind an der der angrenzenden Sichtscheibe zugekehrten Seite der Rahmenteile in einer ersten vertieften Aufnahme unter Zwischenschaltung einer angeschraubten Halteschiene in Lage gehalten.

Der Verdeckbezug ist an einer zweiten, zur Fahrzeugaußenseite hin offenen Aufnahme unter Zwischenschaltung einer profilierten Halteleiste festlegbar, wobei der Verdeckbezug am freien Ende eines nach innen abgestellten Schenkels der Halteleiste eingehängt ist. Die Halteleiste ist an das Rahmenteil angeschraubt.

Das an den Windschutzscheibenrahmen anschließende vordere Rahmenteil ist einstückig mit einem relativ großflächigen vorderen Verdeckabschnitt ausgebildet.

Das hintere, seitliche Rahmenteil des Verdeckgestells wird durch eine gebogene B-Säule gebildet.

Ein Ausführungsbeispiel der Erfindung ist in der Zeichnung dargestellt und wird im folgenden näher erläutert:

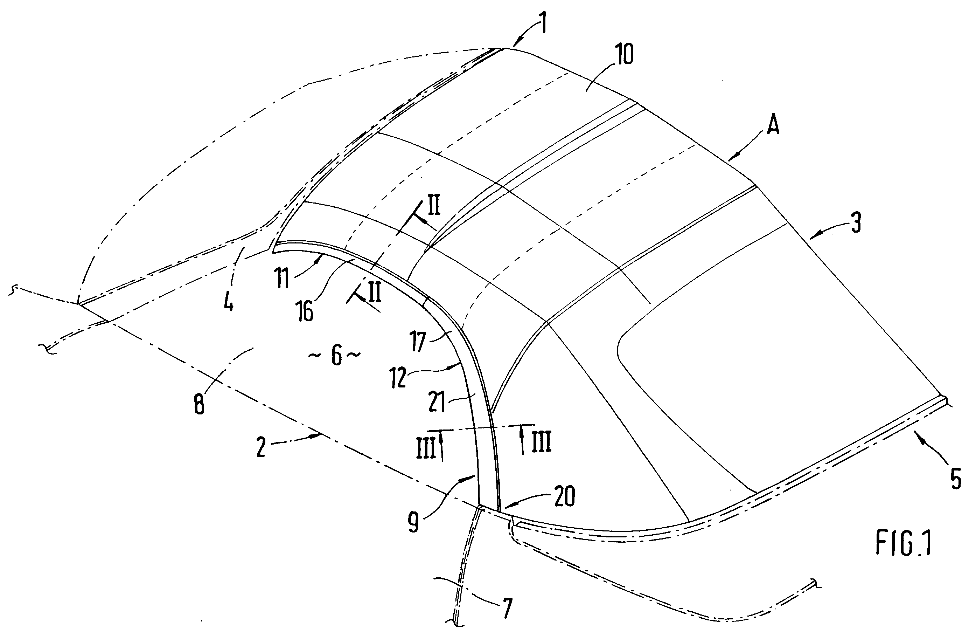

Es zeigt
- Fig. 1: eine perspektivische Teilansicht von schräg hinten auf einen Personenkraftwagen mit einem Faltverdeck,
- Fig. 2: einen Schnitt nach der Linie II-II der Fig. 1 in größerem Maßstab,
- Fig. 3: einen Schnitt nach der Linie III-III der Fig. 1 in größerem Maßstab.

Ein Personenkraftwagen 1 weist oberhalb einer Gürtellinie 2 ein Faltverdeck 3 auf, das sich in einer Schließstellung A von einem Windschutzscheibenrahmen 4 bis zu einem Heckbereich 5 erstreckt und einen Fahrgastraum 6 nach oben hin abdeckt. Der Fahrgastraum 6 ist durch seitliche Türen 7 zugänglich, wobei eine höhenverstellbare Sichtscheibe 8 der Türen 7 oberhalb der Gürtellinie 2 rahmenlos ausgebildet ist.

Das Faltverdeck 3 ist von der Schließstellung A in eine nicht näher dargestellte zusammengeklappte heckseitige Ablagestellung bewegbar und umgekehrt. In der Ablagestellung liegt das zusammengeklappte Verdeck flach auf den Heckbereich 5 auf oder ist in einem nicht näher gezeigten Verdeckkasten untergebracht.

Das Faltverdeck 3 setzt sich aus einem tragenden Verdeckgestell 9 und einem Verdeckbezug 10 zusammen, wobei an seitlich außenliegenden, längsgerichteten Rahmenteilen 11, 12 des Verdeckgestells 9 der Verdeckbezug 10 und Dichtleisten 13 in Lage gehalten sind.

Erfindungsgemäß sind die Anbindungen 14, 15 für den Verdeckbezug 10 und die Dichtleisten 13 räumlich getrennt voneinander an den seitlichen Rahmenteilen 11, 12, vorgesehen, wobei an den Rahmenteilen 11, 12, zwischen dem Anbindungsbereichen 14, 15 zur Fahrzeugaußenseite B hin vorstehende Wandabschnitte 16, 17 ausgebildet sind, die abschnittsweise die Karosserieaußenhaut bilden. Nasenförmige Teilbereiche 18 dieser Wandabschnitte 16, 17 bilden zusammen mit dem Verdeckbezug 10 eine Regenrinne 19. Die vorstehenden Wandabschnitte 16, 17 an den seitlichen Rahmenteilen 11, 12 erstrecken sich entlang der Fahrzeuglängsseiten durchgehend vom Windschutzscheibenrahmen 4 bis zu einem hinter den seitlichen Türen 7, etwa in Höhe der Gürtellinie 2 liegenden Bereich 20.

Die ein markantes Stylingmerkmal darstellenden vorstehenden Wandabschnitte 16, 17 bilden eine Art Zierleiste bzw. eine Stylingkante, die sich vom Windschutzscheibenrahmen 4 nach hinten bzw. unten hin kontinuierlich verbreitert.

Im Ausführungsbeispiel umfaßt das Verdeckgestell 9 zwei aneinandergesetzte, gelenkig miteinander verbundene Rahmenteile 11, 12. Das an den Windschutzscheibenrahmen 4 angrenzende vordere Rahmenteil 11 ist vorteilhafterweise einstückig mit einem relativ großflächigen, nicht näher dargestellten vorderen, querverlaufenden Verdeckabschnitt ausgebildet, der in sich steif ausgebildet ist und den darüberliegenden Verdeckbezug 10 trägt.

Das hintenliegende Rahmenteil 12 wird durch eine in der Seitenansicht gesehen bogenförmige B-Säule 21 gebildet, deren unteres Ende an einem aufbauseitigen, nicht näher dargestellten Verdecklager drehbar gelagert ist.

Der vordere Verdeckabschnitt mit dem integrierten vorderen Rahmenteil 11 und die B-Säule 21 werden vorzugsweise durch Druckgußteile aus einer Aluminium- oder Magnesiumlegierung gebildet.

Selbstverständlich kann das Verdeckgestell 9 auch mehrere, in Längsrichtung aneinandergesetzte Rahmenteile umfassen.

An den beiden Rahmenteilen 11, 12 ist an der der angrenzenden Sichtscheibe 8 zugekehrten Seite eine vertiefte erste Aufnahme 22 ausgebildet, an der die Dichtleiste 13 unter Zwischenschaltung einer Halteschiene 23 befestigt ist. Die erste Aufnahme 22 ist im Querschnitt gesehen etwa U- oder V-förmig profiliert, wobei ein außenliegender Schenkel 24 abschnittsweise durch den vorstehenden Wandabschnitt 16 gebildet ist.

Am Grund der Aufnahme 22 ist die C-förmig profilierte Halteschiene 23 angebracht.

Die Halteschiene 23 ist durch örtlich angeordnete Befestigungsschrauben 25 am Rahmenteil 11 befestigt.

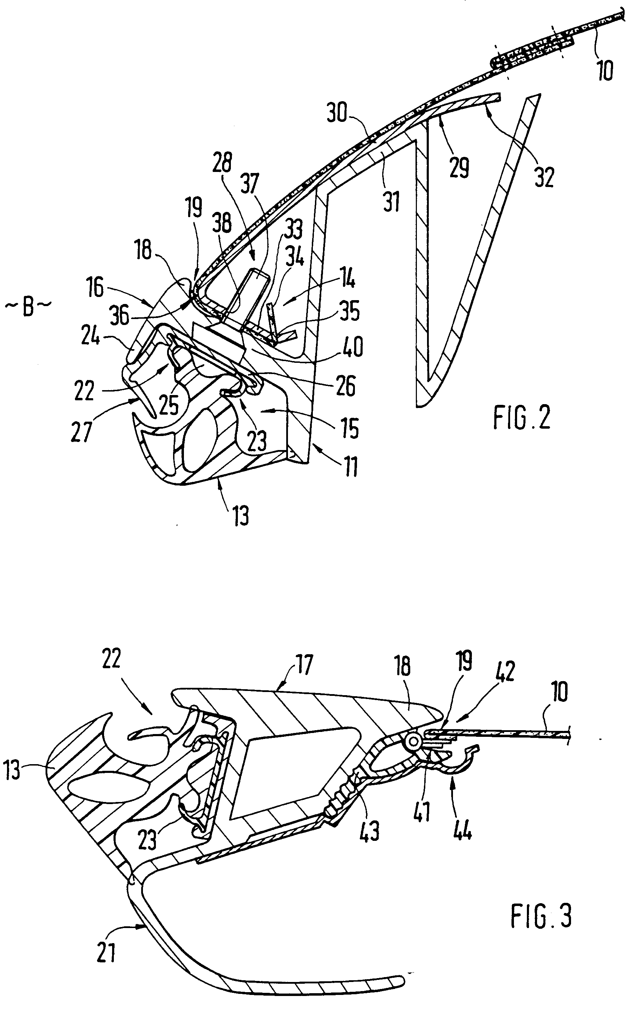

Gemäß Fig. 2 ist die Halteschiene 23 mit einer aus Gummi oder Kunststoff gefertigten Formleiste 26 verbunden, die am Grund der Aufnahme und an der Innenseite des Wandabschnitts 16 abschnittsweise anliegt. Ein Lippenabschnitt 27 der Formleiste 26 ist in Richtung Dichtleiste 13 abgestellt.

Auf der der ersten Aufnahme 22 abgewandten Seite ist am vorderen seitlichen Rahmenteil 11 eine zweite, etwa dreieckförmige Aufnahme 28 vorgesehen, an der der Verdeckbezug 10 festlegbar ist. Die zweite Aufnahme 28 ist nachfolgend an den vorstehenden Wandabschnitt 16 zur Fahrzeugaußenseite hin offen ausgebildet.

Der Verdeckbezug 10 verkleidet lediglich einen Teilbereich des vorderen Rahmenteiles 11. Im Befestigungsbereich des Verdeckbezugs 10 ist eine innenliegende profilierte, den Verdeckbezug 10 tragende Halteleiste 29 vorgesehen, die mittels Befestigungsschrauben 37 am Rahmenteil 11 in Lage gehalten ist.

Die profilierte Halteleiste 29 weist einen ersten langgestreckten, nach oben gerichteten Schenkel 30 auf, der die gewünschte Außenkontur des seitlichen Verdeckbezuges 10 festlegt.

Der erste Schenkel 30 ist vom oberen Rand des vorstehenden Wandabschnittes 16 weggeführt und verläuft etwa parallel und in Fortsetzung des vorstehenden Wandabschnitts 16. Gemäß Fig. 2 verschließt der erste Schenkel die zur Fahrzeugaußenseite hin offene Seite der zweiten Aufnahme 28 und liegt an einer benachbarten Anlagefläche 31 des vorderen, formsteifen Verdeckabschnitts auf.

Das obere freie Ende 32 des ersten Schenkels ist 30 vom Verdeckbezug 10 nach innen hin abgebogen. An das untere Ende des ersten Schenkels 30 der Halteleiste 29 schließt sich ein nach innen gerichteter zweiter Schenkel 33 an, an dem der Verdeckbezug 10 endseitig eingehängt ist.

Am inneren Endbereich des zweiten Schenkels 33 sind örtlich vorstehende Zungen 34 ausgebildet, die durch Schlitzöffnungen 35 des Verdeckbezuges 10 hindurchgeführt sind. Einzelne länger ausgebildete Zungen 34 sind in eine den Verdeckbezug 10 festlegende Haltestellung umbiegbar. Die beiden Schenkel 30, 33 der Halteleiste 29 sind über einen radienförmigen Übergangsbereich 36 miteinander verbunden. Der Verdeckbezug 10 kann über ein nicht näher dargestelltes doppelseitiges Klebeband an der Halteleiste 29 vorfixiert werden, bevor die Zungen 34 durch die Schlitzöffnungen 35 hindurchgeführt werden.

Zur Befestigung der Halteleiste 29 sind Befestigungsschrauben 37 vorgesehen, die von der Unterseite des Rahmenteils 11 her durch Öffnungen hindurchgeführt und in Gewindebohrungen 38 der Halteleiste 29 eingedreht sind. Die Gewindbohrungen 38 können beispielsweise durch Gewindedurchzüge am zweiten Schenkel 33 der Halteleiste 29 gebildet werden.

Im Bereich der Befestigungsstellen für die den Verdeckbezug 10 fixierenden Halteleiste 29 sind an der darunterliegenden Halteschiene 23 örtlich Aussparungen 39 vorgesehen.

Zwischen den übereinanderliegenden Aufnahmen 22, 28 im Bereich des vorderen seitlichen Rahmenteiles 11 ist ein gemeinsamer Verbindungssteg 40 vorgesehen, der etwa rechtwinkelig an den außenliegenden, die Karosserieaußenhaut bildenden Wandabschnitt 16 angeschlossen ist.

Benachbart dem radienförmigen Übergangsbereich 36 der Halteleiste 29 erstreckt sich der nach oben ragende nasenförmige Teilbereich 18 des Wandabschnittes 16, der zusammen mit dem außenliegenden Verdeckbezug 10 die Regenrinne 19 bildet. Der Verdeckbezug 10 ist seitlich nach innen versetzt zum nasenförmigen Teilbereich 18. Der nasenförmige Teilbereich 18 ist an den gemeinsamen Verbindungssteg 40 angeschlossen.

Im Bereich der B-Säule 21 ragt der Randbereich 41 des Verdeckbezuges 10 befestigungslos in eine an der B-Säule 21 vorgesehene Aufnahme 42 hinein und wirkt abstützend mit einer in der Aufnahme 42 angeordneten, weiteren Dichtleiste 43 zusammen.

Die Aufnahme 42 wird durch einen Teilbereich der B-Säule und ein aufgesetztes Schließblech 44 gebildet, das mit der B-Säule 21 örtlich fest verbunden ist (Fig. 3).

## Patentansprüche

1. Faltverdeck (3) für Fahrzeuge, insbesondere Personenkraftwagen, das sich aus einem Verdeckgestell (9) und einem Verdeckbezug (10) zusammensetzt, wobei an seitlichen Rahmenteilen (11, 12) des Verdeckgestells (9) der Verdeckbezug (10) und Dichtleisten (13) in Lage gehalten sind, **dadurch gekennzeichnet,** daß die Anbindungen (14, 15) für den Verdeckbezug (10) und die Dichtleisten (13) getrennt voneinander an den seitlichen Rahmenteilen (11, 12) des Verdeckgestells (9) vorgesehen sind, wobei sich zwischen den beabstandeten Anbindungen (14, 15) nicht vom Verdeckbezug (10) verkleidete, abschnittsweise die Karosserieaußenhaut bildende Wandabschnitte (16, 17) der seitlichen Rahmenteile (11, 12) des Verdeckgestells (9) erstrecken und daß der dem Verdeckbezug (10) zugekehrte nasenförmige Teilbereich (18) des die Karosserieaußenhaut bildenden Wandabschnittes (16, 17) so ausgebildet ist, daß er zusammen mit dem angrenzenden, weiter innenliegenden Verdeckbezug (10) eine Regenrinne (19) bildet.

2. Faltverdeck nach Anspruch 1, **dadurch gekennzeichnet,** daß die zwischen den beiden Anbindungen (14, 15) verlaufenden Wandabschnitte (16, 17) der seitlichen Rahmenteile (11, 12) eine Zierleiste bilden, die sich, beginnend vom Windschutzscheibenrahmen (4) entlang den Fahrzeuglängsseiten durchgehend bis zu einem hinter den seitlichen Türen (17) etwa in Höhe der Gürtellinie (2) liegenden Bereich (20) erstrecken.

3. Faltverdeck nach den Ansprüchen 1 und 2, **dadurch gekennzeichnet,** daß die Breite der Zierleiste vom Windschutzscheibenrahmen (4) nach hinten hin kontinuierlich zunimmt.

4. Faltverdeck nach Anspruch 1, **dadurch gekennzeichnet,** daß das Verdeckgestell (9) im seitlich außenliegenden Bereich zwei in Längsrichtung aneinandergesetzte, gelenkig miteinander verbundene Rahmenteile (11, 12) umfaßt.

5. Faltverdeck nach Anspruch 4, **dadurch gekennzeichnet,** daß ein an den Windschutzscheibenrahmen (4) angrenzendes vorderes Rahmenteil (11) einstückig mit einem relativ großflächigen, querverlaufenden vorderen Verdeckabschnitt ausgebildet ist.

6. Faltverdeck nach Anspruch 4, **dadurch gekennzeichnet,** daß das hintenliegende Rahmenteil (12) durch eine in der Seitenansicht gesehen bogenförmige B-Säule (21) gebildet wird, deren unteres Ende drehbar an einem aufbauseitigen Verdecklager gelagert ist.

7. Faltverdeck nach den Ansprüchen 1 bis 6, **dadurch gekennzeichnet,** daß an beiden Rahmenteilen (11, 12) an der der angrenzenden Sichtscheibe (8) zugekehrten Seite jeweils eine vertiefte erste Aufnahme (22) ausgebildet ist, an der die Dichtleiste (13) unter Zwischenschaltung einer Halteschiene (23) befestigt ist.

8. Faltverdeck nach Anspruch 7, **dadurch gekennzeichnet,** daß die erste Aufnahme (22) etwa U- oder V-förmig ausgebildet ist, wobei ein außenliegender Schenkel (24) der Aufnahme (22) durch einen der Sichtscheibe (18) zugekehrten Teilbereich des vorstehenden Wandabschnitts (16, 17) bzw. der Zierleiste gebildet wird.

9. Faltverdeck nach den Ansprüchen 7 und 8, **dadurch gekennzeichnet,** daß am Grund der vertieften Aufnahme (22) die etwa C-förmig profilierte Halteschiene (23) bzw. eine mit dieser verbundene Formleiste (26) aufliegt und durch Befestigungsschrauben (25) festlegbar ist.

10. Faltverdeck nach einem oder mehreren der vorangegangenen Ansprüche, **dadurch gekennzeichnet,** daß am vorderen seitlichen Rahmenteil (11) auf der der ersten Aufnahme (22) abgewandten Seite eine zweite, etwa dreieckförmige Aufnahme (28) vorgesehen ist, an der der Verdeckbezug (10) festlegbar ist, wobei die zweite Aufnahme (28) nachfolgend an den vorstehenden Wandabschnitt (16) zur Fahrzeugaußenseite B hin offen ausgebildet ist.

11. Faltverdeck nach Anspruch 10, **dadurch gekennzeichnet,** daß der Verdeckbezug (10) lediglich um einen Teilbereich des vorderen Rahmenteiles (11) herumgeführt ist und daß im Befestigungsbereich des Verdeckbezuges (10) eine inneliegende profilierte Halteleiste (29) vorgesehen ist, auf der der Verdeckbezug (10) aufliegt, wobei die Halteleiste (29) mittels Befestigungsschrauben (37) am Rahmenteil (11) in Lage gehalten ist.

12. Faltverdeck nach einem oder mehreren der vorangegangenen Ansprüche, **dadurch gekennzeichnet,** daß die profilierte Halteleiste (29) einen ersten, langgestreckten nach oben gericheten Schenkel (30) aufweist, der die Form des Verdeckbezuges (10) im seitlich außenliegenden Bereich festlegt, wobei der erste Schenkel (30) benachbart der zweiten Aufnahme (28) an einer angrenzenden Anlagefläche (31) des vorderen Verdeckabschnitts aufliegt.

13. Faltverdeck nach Anspruch 12**, dadurch gekennzeichnet,** daß die profilierte Halteleiste (29) einen zweiten nach innen gerichteten Schenkel (33) umfaßt, wobei die beiden Schenkel (30, 33) der Halteleiste (29) über einen radienförmigen Übergangsbereich (36) aneinander angeschlossen sind.

14. Faltverdeck nach Anspruch 13, **dadurch gekennzeichnet,** daß an einem inneren Endbereich des zweiten Schenkels (33) örtlich abgestellte Zungen (34) ausgebildet sind, die durch Schlitzöffnungen (35) des Verdeckbezuges (10) hindurchgeführt sind, wobei einzelne länger ausgebildete Zungen (34) in eine Haltestellung C umbiegbar sind.

15. Faltverdeck nach einem oder mehreren der vorangegangenen Ansprüche, **dadurch gekennzeichnet,** daß zwischen den übereinanderliegenden Aufnahmen (22,28) im Bereich des vorderen seitlichen Rahmenteiles (11) ein gemeinsamer Verbindungssteg (40) vorgesehen ist, der etwa rechtwinkelig an den außenliegenden, die Karosserieaußenhaut bildenden Wandabschnitt (16) angeschlossen ist.

16. Faltverdeck nach den Ansprüchen 1 bis 15, **dadurch gekennzeichnet,** daß der nach oben ragende nasenförmige Teilbereich (18) benachbart des radienförmigen Übergangsbereiches (36) der Halteleiste (29) an den gemeinsamen Verbindungsbereich (40) angeschlossen ist, wobei der nasenförmige Teilbereich (18) und der Verdeckbezug (10) die Regenrinne (19) bilden.

17. Faltverdeck nach einem oder mehreren der vorangegangenen Ansprüche, **dadurch gekennzeichnet,** daß am Grund der C-förmig profilierten Halteschiene (23) im Bereich der Befestigungsschrauben (37) für den Verdeckbezug (10) örtlich Aussparungen (39) vorgesehen sind.

18. Faltverdeck nach einem oder mehreren der vorangegangenen Ansprüche, **dadurch gekennzeichnet,** daß im Bereich der B-Säule (21) der Randbereich des Verdeckbezuges (10) befestigungslos in eine an der B-Säule (21) vorgesehene Aufnahme (42) hineinragt und dort mit einer weiteren Dichtleiste (43) abstützend zusammenwirkt.

19. Faltverdeck nach Anspruch 18, **dadurch gekennzeichnet,** daß die Aufnahme (42) durch einen Teilbereich der B-Säule (21) und ein aufgesetztes Schließblech (44) gebildet wird, wobei das Schließblech (44) mit der B-Säule örtlich fest verbunden ist.

## Claims

1. A folding top (3) for vehicles, in particular passenger cars, comprising a folding-top frame (9) and a folding-top cover (10), wherein the folding-top cover (10) and sealing strips (13) are held in position on lateral frame parts (11, 12) of the folding-top frame (9), **characterized in that** the bindings (14, 15) for the folding-top cover (10) and the sealing strips (13) are provided separately from one another on the lateral frame parts (11, 12) of the folding-top frame (9), wherein wall portions (16, 17) of the lateral frame parts (11, 12) of the folding-top frame (9) not covered by the folding-top cover (10) and forming in part the outer sign of the bodywork extend between the spaced bindings (14, 15), and the nose-shaped partial area (18) - facing the folding-top cover (10) - of the wall portion (16, 17) forming the outer skin of the bodywork is designed in such a way that, together with the adjacent folding-top cover (10) situated further inside, it forms a drip moulding (19).

2. A folding top according to Claim 1, **characterized in that** the wall portions (16, 17) of the lateral frame parts (11, 12) extending between the two bindings (14, 15) form an ornamental strip which, starting from the windscreen frame (4) and passing along the longitudinal sides of the vehicle, extends as far as an area (20) situated behind the side doors (17) substantially at the level of the waist line (2).

3. A folding top according to Claims 1 and 2, **characterized in that** the width of the ornamental strip continuously increases towards the rear from the windscreen frame (4).

4. A folding top according to Claim 1, **characterized in that** in the laterally outermost area the folding-top frame (9) comprises two frame parts (11, 12) juxtaposed in the longitudinal direction and connected to each other in an articulated manner.

5. A folding top according to Claim 4, **characterized in that** a front frame part (11) adjoining the windscreen frame (4) is formed integrally with a transversely extending front cover portion of relatively large area.

6. A folding top according to Claim 4, **characterized in that** the frame part (12) situated at the rear is formed by a B-column (21) which is curved as viewed from the side and the lower end of which is mounted rotatably on a folding-top bearing on the body.

7. A folding top according to Claims 1 to 6, **characterized in that** a respective recessed first receiving means (22), to which the sealing strip (13) is secured with the interposition of a retaining rail (23), is formed in each case on the two frame parts (11, 12) on the side facing the adjacent window (8).

8. A folding top according to Claim 7, **characterized in that** the first receiving means (22) is made substantially U-shaped or V-shaped, wherein an arm (24) of the receiving means (22) situated on the outside is formed by a partial area - facing the window (8) - of the projecting wall portion (16, 17) or the ornamental strip.

9. A folding top according to Claims 7 and 8, **characterized in that** the retaining rail (23) with a substantially C-shaped section or a moulding strip (26) joined thereto rests on the base of the recessed receiving means (22) and can be secured there by fastening screws (25).

10. A folding top according to one or more of the preceding Claims, **characterized in that** a second, substantially triangular, receiving means (28), to which the folding-top cover (10) can be secured, is provided on the front lateral frame part (11) on the side remote from the first receiving means (22), wherein the second receiving means (28), following the projecting wall portion (16), is made open towards the outside **B** of the vehicle.

11. A folding top according to Claim 10, **characterized in that** the folding-top cover (10) passes around only a partial area of the front frame part (11), and an internal profiled retaining strip (29), on which the folding-top cover (10) rests, is provided in the fastening area of the folding-top cover (10), wherein the retaining strip (29) is held in position on the frame part (11) by means of fastening screws (37).

12. A folding top according to one or more of the preceding Claims, **characterized in that** the profiled retaining strip (29) has a first elongate arm (30) which is directed upwards and which determines the shape of the folding-top cover (10) in the area situated laterally on the outside, wherein, next to the second receiving means (28), the first arm (30) rests on an adjacent abutment face (31) of the front folding-top portion.

13. A folding top according to Claim 12, **characterized in that** the profiled retaining strip (29) comprises a second arm (33) directed inwards, wherein the two arms (30, 33) of the retaining strip (29) are attached to each other by way of a radius-shaped transition area (36).

14. A folding top according to Claim 13, **characterized in that** locally projecting tabs (34), which extend through slot openings (35) in the folding-top cover (10), are formed on an inner end area of the second arm (33), wherein individual longer tabs (34) can be bent over into a retaining position **C**.

15. A folding top according to one or more of the preceding Claims, **characterized in that** a common connecting web (40), which is attached substantially at a right angle to the outside wall portion (16) forming the outer skin of the bodywork, is provided between the receiving means (22, 28) arranged one above the other in the region of the front lateral frame part (11).

16. A folding top according to Claims 1 to 15, **characterized in that** the upwardly projecting, nose-shaped partial area (18) is attached to the common connecting area (40) in the vicinity of the radius-shaped transition area (36) of the retaining strip (29), wherein the nose-shaped partial area (18) and the folding-top cover (10) form the drip moulding (19).

17. A folding top according to one or more of the preceding Claims, **characterized in that**, on the base of the retaining rail (23) with a C-shaped section, openings (39) are provided locally in the region of the fastening screws (37) for the folding-top cover (10).

18. A folding top according to one or more of the preceding Claims, **characterized in that** in the region of the B-column (21) the edge area of the folding-top cover (10) projects without fastening into a receiving means (42) provided on the B-column (21) and cooperates in a supported manner with a further sealing strip (43) there.

19. A folding top according to Claim 18, **characterized in that** the receiving means (42) is formed by a partial area of the B-column (21) and a closure sheet (44) mounted thereon, wherein the closure sheet (44) is firmly joined to the B-column (21) locally.

## Revendications

1. Capote pliante (3) pour véhicules automobiles, en particulier pour voitures de tourisme, qui se compose d'un bâti (9) et d'un revêtement (10), le revêtement (10) et des baguettes d'étanchéité (13) étant maintenus en position sur des parties de cadre (11, 12) latérales du bâti (9), caractérisée en ce que les attaches (14, 15) pour le revêtement (10) et les baguettes d'étanchéité (13) sont prévues séparées les unes des autres sur les parties de cadre (11, 12) latérales du bâti (9), entre les attaches (14, 15) espacées s'étendant des portions de paroi (16, 17), non recouvertes par le revêtement (10), formant par endroits l'enveloppe extérieure de la carrosserie, des parties de cadre (11, 12) latérales du bâti (9) et en ce que la zone partielle (18) en forme d'ergot, tournée vers le revêtement (10), de la portion de paroi (16, 17) formant l'enveloppe extérieure de la carrosserie, est conçue de manière à former une rigole (19) pour la pluie, avec le revêtement (10) adjacent, situé plus loin à l'intérieur.

2. Capote pliante selon la revendication 1, caractérisée en ce que les portions de paroi (16, 17), s'étendant entre les deux attaches (14, 15), des parties de cadre (11, 12) latérales, forment une baguette d'enjoliveur, qui, partant du cadre (4) du pare-brise, s'étend en continu le long des côtés longitudinaux du véhicule, jusqu'à une zone (20) située derrière les portes (17) latérales, à peu près à hauteur de la ligne médiane (2).

3. Capote pliante selon les revendications 1 et 2, caractérisée en ce que la largeur de la baguette d'enjoliveur augmente en continu vers l'arrière, à partir du cadre (4) du pare-brise.

4. Capote pliante selon la revendication 1, caractérisée en ce que le bâti (9) de la capote comprend, dans la zone située latéralement à l'extérieur, deux parties de cadre (11, 12) juxtaposées dans la direction longitudinale, reliées entre elles de manière articulée.

5. Capote pliante selon la revendication 4, caractérisée en ce qu'une partie de cadre (11) avant, adjacente au cadre (4) du pare-brise, est formée d'une seule pièce avec une portion de capote avant, s'étendant transversalement, de surface relativement grande.

6. Capote pliante selon la revendication 4, caractérisée en ce que la partie de cadre (12) située à l'arrière est formée par un montant "B" (21), en forme d'arc vu de côté, dont l'extrémité inférieure est montée de manière à pouvoir tourner sur un palier de capote, côté carrosserie.

7. Capote pliante selon les revendications 1 à 6, caractérisée en ce que sur chacune des deux parties de cadre (11, 12), sur le côté tourné vers la vitre (8) adjacente, est formé un premier logement (22) enfoncé, sur lequel est fixé la baguette d'étanchéité (13), par insertion d'un rail de maintien (23).

8. Capote pliante selon la revendication 7, caractérisée en ce que le premier logement (22) a une forme à peu près en U ou en V, une branche (24) située à l'extérieur du logement (22) étant formée par une zone partielle, tournée vers la vitre (18), de la portion de paroi (16, 17) dépassante ou de la baguette d'enjoliveur.

9. Capote pliante selon les revendications 7 et 8, caractérisée en ce que sur le fond du logement (22) enfoncé repose le rail de maintien (23) profilé à peu près en C ou une baguette de forme (26) reliée à celui-ci, qui peut être fixé par des vis de fixation (25).

10. Capote pliante selon une ou plusieurs des revendications précédentes, caractérisée en ce que sur la partie de cadre (11) latérale, avant, sur le côté tourné à l'opposé du premier logement (22), il est prévu un deuxième logement (28) à peu près triangulaire, sur lequel peut être fixé le revêtement (10) de la capote, le deuxième logement (28) étant ouvert vers le côté extérieur B du véhicule, à la suite de la portion de paroi (16) dépassante.

11. Capote pliante selon la revendication 10, caractérisée en ce que le revêtement (10) passe uniquement autour d'une zone partielle de la partie de cadre (11) avant et en ce que dans la zone de fixation du revêtement (10), il est prévu une baguette de maintien (29) profilée, située à l'intérieur, sur laquelle repose le revêtement (10), la baguette de maintien (29) étant maintenue en position sur la partie de cadre (11), au moyen de vis de fixation (37).

12. Capote pliante selon un ou plusieurs des revendications précédentes, caractérisée en ce que la baguette de maintien (29) profilée présente une première branche (30) allongée, dirigée vers le haut, qui définit la forme du revêtement (10) dans la zone située latéralement à l'extérieur, la première branche (30), au voisinage du deuxième logement (28), reposant contre une surface d'application (31) adjacente de la portion de capote avant.

13. Capote pliante selon la revendication 12, caractérisée en ce que la baguette de maintien (29) profilée comprend une deuxième branche (33), dirigée vers l'intérieur, les deux branches (30, 33) de la baguette de maintien (29) étant raccordées l'une à l'autre par une zone de transition (36) en forme de rayons.

14. Capote pliante selon la revendication 13, caractérisé en ce que dans une zone d'extrémité intérieure de la deuxième branche (33), sont formées des languettes (34) localement déviées, qui passent à travers des ouvertures en fente (35) du revêtement (10), certaines languettes (34) plus longues pouvant être repliées dans une position de maintien C.

15. Capote pliante selon un ou plusieurs des revendications précédentes, caractérisée en ce qu'entre les logements (22, 28) superposés, dans la zone de la partie de cadre (11) latérale, avant, il est prévu une entretoise de liaison (40) commune, qui se raccorde à peu près à angle droit à la portion de paroi (16) située à l'extérieur, formant l'enveloppe extérieure de la carrosserie.

16. Capote pliante selon les revendications 1 à 15, caractérisée en ce que la zone partielle (18) en forme d'ergot, dépassant vers le haut, est raccordée, au voisinage de la zone de transition (36) en forme de rayons de la baguette de maintien (29), à la zone de liaison (40) commune, la zone partielle (18) en forme d'ergot et le revêtement (10) formant la rigole d'eau de pluie (19).

17. Capote pliante selon une ou plusieurs des revendications précédentes, caractérisée en ce que sur le fond du rail de maintien (23), profilé en C, des découpes (39) sont prévues localement dans la zone des vis de fixation (37), pour le revêtement (10).

18. Capote pliante selon une ou plusieurs des revendications précédentes, caractérisée en ce que dans la zone du montant "B" (21), la zone de bordure du revêtement (10) s'engage sans fixation à l'intérieur d'un logement (42), prévu sur le montant "B" (21), et coopère à cet endroit par appui avec une autre baguette d'étanchéité (43).

19. Capote pliante selon la revendication 18, caractérisée en ce que le logement (42) est formé par une zone partielle du montant "B" (21) et une tôle de fermeture (44) placée dessus, la tôle de fermeture (44) étant reliée fixement localement au montant "B".
